Europäisches Patentamt

**European Patent Office**

**Office européen des brevets**

(11) Numéro de publication: **0 252 773 B1**

(12) **FASCICULE DE BREVET EUROPEEN**

(45) Date de publication de fascicule du brevet: **17.06.92** (51) Int. Cl.⁵: **G08G 1/123**, B60R 25/00

(21) Numéro de dépôt: **87400233.0**

(22) Date de dépôt: **02.02.87**

(54) **Procédé et dispositif de contrôle du déplacement d'objets, en particulier de véhicules automobiles.**

(30) Priorité: **10.07.86 FR 8610109**

(43) Date de publication de la demande:
**13.01.88 Bulletin 88/02**

(45) Mention de la délivrance du brevet:
**17.06.92 Bulletin 92/25**

(84) Etats contractants désignés:
**AT BE CH DE ES FR GB GR IT LI LU NL SE**

(56) Documents cités:
**FR-A- 2 256 416**

**IEEE TRANSACTIONS ON VEHICULAR TECH-NOLOGY, vol. VT-26, no. 1, février 1977, pages 30-38, New York, US; R.A. HAUSLEN: "The promise of automatic vehicle identification"**

**IEEE TRANSACTIONS ON COMMUNICA-TIONS, vol. COM-23, no. 5, mai 1975, pages 489-500, New york, US; R.W. DONALDSON: "Design of transponder signals and receivers for automatic vehicle location and identification systems"**

**AUTOMATION, vol. 23, no. 1, janvier 1975, page 12, Cleveland, US; "Electronic labels record shipping data"**

**IEEE TRANSACTIONS ON VEHICULAR TECH-NOLOGY, vol. VT-29, no. 2, mai 1980, pages 200-207, IEEE, New York, US; R.E. FENTON: "On future traffic control: Advanced systems hardware"**

(73) Titulaire: **Volback S.A.**
**22 Avenue Emile Zola**
**F-75015(FR)**

(72) Inventeur: **Giampaoli, Giuseppe**
**230, rue du Faubourg Saint-Honoré**
**F-75008 Paris(FR)**
Inventeur: **Maurice, Henry**
**2, rue du Maréchal Maunoury**
**F-93110 Rosny sous bois(FR)**

(74) Mandataire: **Plaçais, Jean-Yves et al**
**Cabinet Netter, 40, rue Vignon**
**F-75009 Paris(FR)**

## Description

L'invention concerne en particulier le contrôle du déplacement de véhicules automobiles, notamment aux fins de produire une dissuasion contre le vol de ces véhicules.

On connaît déjà différents moyens utilisés pour la dissuasion contre le vol des automobiles. L'un de ceux-ci consiste à réaliser des marquages sur tout ou partie des vitrages du véhicule. Pour rendre le véhicule méconnaissable, le voleur est alors dans l'obligation d'échanger tous les vitrages, ce qui est une opération à la fois longue et onéreuse.

Il a par ailleurs été proposé de munir les véhicules automobiles de différents types de dispositifs antivol. Actuellement, on considère qu'il est nécessaire de prévoir plusieurs dispositifs ou moyens, de natures différentes, si l'on souhaite véritablement dissuader les voleurs de dérober un véhicule.

On connaît enfin (article de Robert Hauslen, "the Promise of Automotive Vehicle Identification", IEEE transactions on vehicular technology, vol. VT-26, No. 1, Février 1977) un procédé de contrôle du déplacement d'objets, en particulier de véhicules automobiles, qui consiste à lire à distance une ou plusieurs marques que porte le véhicule et qui sont susceptibles de l'identifier complètement.

Un tel procédé est du type dans lequel on fait passer chaque véhicule par une voie de passage obligé. Certains au moins des véhicules sont munis d'au moins une cellule, noyée dans l'une de la surface principale externe, mais de façon invisible et en un point indéterminable, la ou les cellules étant propres à définir de manière passive, sans alimentation électrique propre, un code unique lisible à distance et associé d'une manière biunivoque au véhicule, chaque cellule comportant une antenne ou boucle réceptrice ; enfin, chaque voie est munie d'au moins un détecteur propre à lire sur chaque véhicule le code défini par la ou les cellules qu'il porte, ainsi que d'organes de traitement, le détecteur comportant une antenne en boucle émettant un faisceau électromagnétique à une fréquence prédéterminée.

Ce procédé, basé notamment sur une technologie micro-ondes, utilise pour la lecture du code d'identification, une transmission électromagnétique à une fréquence d'harmonique seconde de la fréquence d'émission, et s'avère ainsi complexe à mettre en oeuvre.

La présente invention vient proposer un procédé de dissuasion antivol d'une nature originale.

Selon la principale caractéristique de l'invention, chaque cellule module la charge de son antenne ou boucle réceptrice selon des impulsions représentant son propre code unique lorsque son antenne ou boucle réceptrice est couplée avec une antenne en boucle d'un détecteur de manière à effectuer une modulation par absorption des ondes émises ; le détecteur lit le code unique par exploitation des variations de l'appel de courant dans son antenne en boucle ; on enregistre dans au moins un fichier de référence des informations d'identification en rapport avec certains au moins des codes uniques précités et les organes de traitement sont propres à rechercher si chaque code lu se trouve dans le fichier de référence, et à mémoriser le résultat de cette recherche.

Ceci permet, notamment, l'identification et le suivi de véhicules volés.

La voie de passage obligé peut être une simple voie de circulation, ou, de préférence, un point de passage obligé pour un véhicule à la fois. La voie peut donc, en particulier, être définie comme un portique, où le véhicule peut être astreint à passer à vitesse moyenne ou faible.

Très avantageusement, le détecteur lit la cellule par voie d'ondes, en particulier électromagnétiques, de préférence kilométriques.

Selon un autre aspect de l'invention, on munit chaque véhicule d'au moins deux cellules, propres à définir ensemble le code unique.

En variante, on peut placer le code unique sur l'une et l'autre des cellules. Mais le véhicule ne sera reconnu comme possédant authentiquement le code que s'il est lu deux fois sur les deux cellules.

Par ailleurs, les deux cellules peuvent être implantées à des endroits différents du véhicule.

Selon un autre aspect de l'invention, on produit, au moins, un fichier des codes en cours de validité, et un fichier des codes à surveiller, tels que ceux de véhicules volés.

Dans un mode de réalisation particulier, la voie comprend un portique, muni d'une barrière, dont l'ouverture est subordonnée au résultat de la comparaison du code du véhicule au fichier de référence.

Mais on peut également prévoir un simple enregistrement du passage du véhicule, sans chercher à arrêter celui-ci.

Il est également avantageux que le détecteur soit noyé dans une paroi du portique ou dans le sol de la voie de circulation.

L'invention a également pour objet un dispositif permettant la mise en oeuvre du procédé ci-dessus évoqué, comportant à bord de certains véhicules au moins, une cellule passive comportant une antenne ou boucle réceptrice, propre à répondre à distance à une émission d'ondes prédéterminée par un code unique, associée de manière biunivoque au véhicule, et au moins un détecteur comportant une antenne en boucle enterrée pour produire l'émission d'ondes à une fréquence prédéterminée et détecter le code unique, caractérisé en ce que chaque cellule comporte des moyens de modulation de la charge de son antenne ou boucle réceptrice selon des impulsions représentant son propre code unique lorsque son antenne ou boucle réceptrice est couplée avec l'antenne en boucle du détecteur de manière à effectuer une modulation par absorption des ondes émises,

et en ce que le détecteur comporte des moyens d'exploitation des variations de l'appel de courant dans son antenne en boucle pour lire le code unique.

D'autres caractéristiques et avantages de l'invention apparaîtront à l'examen de la description détaillée ci-après, et des dessins annexés, sur lesquels :

- la figure 1 est un schéma de principe d'un dispositif mettant en oeuvre l'invention ;
- les figures 2 à 4 sont des schémas synoptiques permettant de mieux comprendre différentes applications du procédé selon l'invention, et
- la figure 5 est une variante préférée du dispositif selon l'invention.

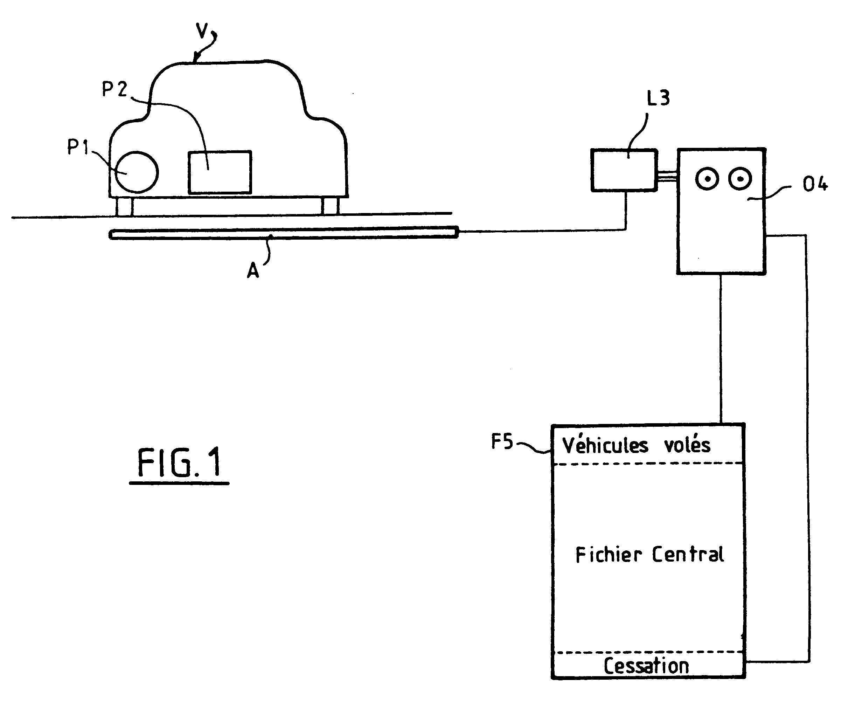

Sur la figure 1, la référence V désigne un véhicule.

Celui-ci est muni de deux plaquettes codées P1 et P2, qui possèdent en principe la même forme, celle-ci pouvant être ronde comme indiquée en P1 ou bien rectangulaire comme indiqué en P2.

Par ailleurs, la figure 1 montre les plaquettes comme figurant en apparence sur le côté du véhicule.

Il est particulièrement avantageux que ces plaquettes soient placées au-dessous du véhicule.

Il peut s'agir de plaquettes réalisées dans un matériau tel que le chlorure de polyvinyle, fixé par exemple par trois rivets du type dit "pop" (marque déposée), couramment utilisés pour fixer les plaques d'immatriculation.

Des circuits électroniques de codage sont prévus dans les plaquettes P1 et P2, de manière à pouvoir être identifiés par ondes électromagnétiques, comme on le verra ci-après.

Un dispositif lecteur est implanté pour être en mesure de lire les plaquettes P1 et P2. Ce lecteur est illustré en L3 sur la figure 1.

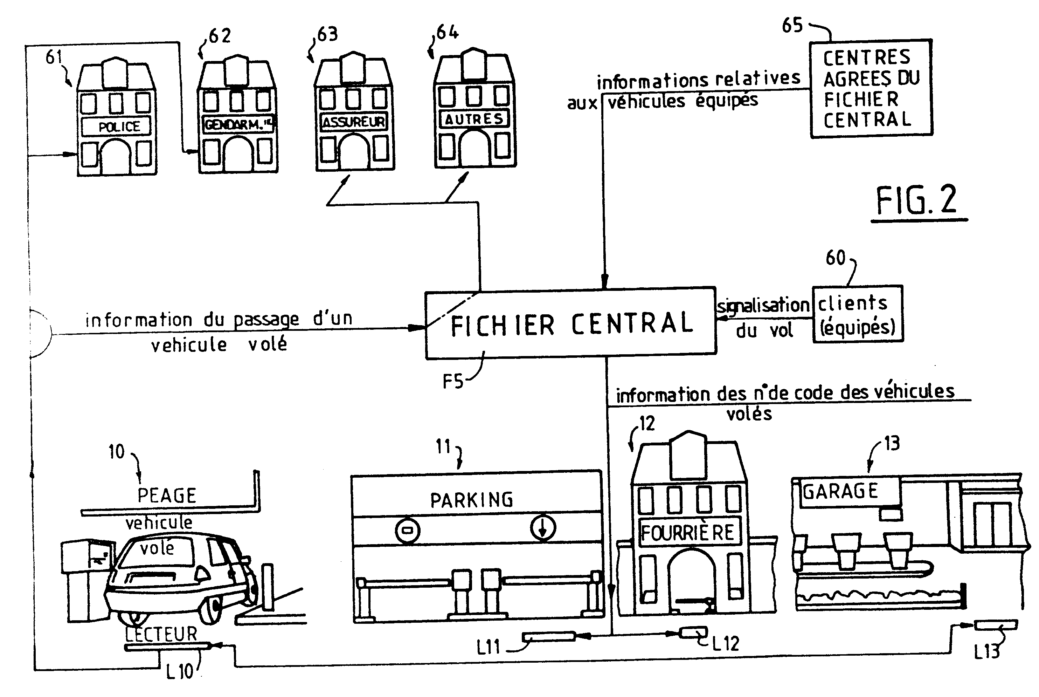

Comme indiqué en L10, L11, L12 et L13 sur la figure 2, le lecteur (ou, du moins, son antenne) est en principe noyé dans le sol, au droit d'un point de passage obligé.

Lors des premières expérimentations, il a été envisagé que le lecteur L3 et son antenne soient par exemple ceux de l'ensemble de contrôle d'accès "mains libres" XS vendu par la Société ZETTLER, La Garenne Colombes, France ou tout autre matériel similaire.

Il a été observé que cet appareil peut lire des cellules passives, à distance, sans qu'aucune source d'énergie ne soit implantée dans cette cellule.

Celle-ci n'est donc pas détectable.

Par ailleurs, dès lors qu'elle est noyée dans le sol, l'antenne n'est pas visible et n'est donc pas sabotable.

Cependant, il s'est avéré que le dispositif qui vient d'être mentionné est sensible aux variations que créait, dans ces conditions de fonctionnement, le passage d'une automobile.

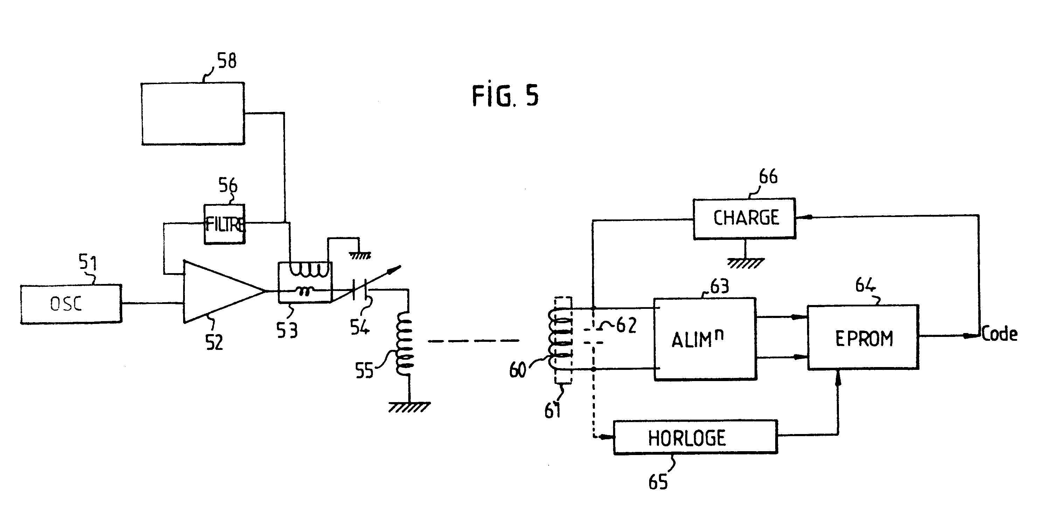

C'est pourquoi, il est actuellement préféré d'utiliser le dispositif de la figure 5.

Un oscillateur 51 opérant par exemple à 128 kHz alimente un amplificateur 52. La sortie de l'amplificateur 52 est reliée par l'intermédiaire du primaire d'un transformateur de courant 53 à un condensateur variable 54 suivi d'une bobine 55 qui est une boucle enterrée dans le sol. Le condensateur variable 54 permet l'accord, afin d'augmenter autant que possible la puissance rayonnée.

Le secondaire du transformateur de courant 53 est relié par un filtre passe-bas 56 comprenant un détecteur d'amplitude à l'entrée inverseuse de l'amplificateur 52.

La fréquence de coupure du filtre passe-bas 56 est choisie telle que le signal de correction appliqué à l'amplificateur 52 lui permet de maintenir le signal à niveau constant, aussi bien en présence qu'en l'absence d'une automobile au droit de la boucle 55.

Le montage comporte également une liaison vers un circuit d'exploitation 58. Cette liaison peut partir de l'entrée du filtre 56, ou bien encore être prise sur l'alimentation de l'amplificateur 52.

Le détecteur est formé d'une bobine 60 incorporée à tous véhicules. La bobine 60 va passer en position de couplage avec la boucle enterrée 55.

Cette bobine 60 peut être munie d'un noyau de ferrite 61 et peut également être associée à un condensateur 62, ces deux compléments n'étant pas impérativement nécessaires.

La tension disponible aux bornes de la bobine 60 est utilisée dans un circuit d'alimentation 63, qui fournit les tensions nécessaires aux différents autres éléments du récepteur embarqué sur le véhicule.

La figure 5 montre que l'alimentation 63 sert notamment pour faire fonctionner une mémoire morte programmable électriquement (EPROM) référencée 64.

Une fréquence d'horloge est élaborée par un circuit 65. Elle est synchronisée sur la fréquence du signal reçu à 128 kHz, disponible aux bornes de la bobine 60. La synchronisation peut être acquise par le fait que le signal d'horloge est tiré directement du signal reçu, ou bien par le fait que l'on asservit une source d'horloge séparée à la cadence du signal reçue, en fréquence et en phase.

De cette manière, la mémoire 64 fournit une information de code binaire qui est appliquée à un circuit de charge 66 propre à moduler l'appel de courant que va provoquer le bobinage 60, par rapport au bobinage enterré 55.

On préfère actuellement que la modulation de l'appel de courant se fasse par action sur l'amortissement de la bobine 60. Mais, on peut également envisager, en variante, que la variation se fasse par un décalage de l'éventuelle fréquence d'accord du circuit défini par la boucle 60 et le condensateur 62 (par exemple).

Dans une réalisation particulière, le code est émis avec fréquence de 64 kHz.

Les perturbations créées par le passage de l'automobile se font à une fréquence inférieure. En conséquence, la fréquence de coupure du filtre 56 est nettement plus basse que 64 kHz.

L'un des avantages essentiels du circuit qui vient d'être décrit est que, d'une part, on arrive à compenser ce qui est dû au passage de l'automobile elle-même, d'autre part, on retrouve au niveau du circuit d'émission un signal modulé par le code qui est représentatif à la fois en fréquence et en phase.

L'exploitation de ce signal par le circuit 58 peut se faire, après un éventuel changement de fréquence, par transformation de Fourier numérique, ou bien par deux changements de fréquence permettant une intercorrélation entre le signal de retour, modulé sous l'effet du code et le signal initialement émis par l'oscillateur 51, convenablement divisé en fréquence.

L'homme de l'art comprendra que l'on a ainsi la possibilité de récupérer des signaux largement noyés dans le bruit.

Dans la description qui précède, on a envisagé un code modulé par une seule fréquence, c'est-à-dire que les bits 1 correspondent par exemple à la variation de charge de la bobine 60 tandis que les bits 0 ne correspondent à aucune variation. On peut, bien entendu, prévoir que les bits 1 sont transmis par une action à une certaine cadence sur la charge de la bobine 60, tandis que les bits 0 sont transmis par une action à une autre cadence sur la charge de la même bobine 60. On fera en sorte que les deux cadences ne possèdent pas d'harmonique commun, du moins dans la bande utilisée.

Cette disposition de la figure 5 présente un autre avantage; du fait que les variations à imprimer par le circuit 66 à la bobine 60 sont très rapides, on dispose en permanence au niveau du circuit 63 d'une puissance nécessaire pour l'alimentation des circuits du récepteur.

La cellule peut être d'un diamètre de 56 mm, pour une épaisseur d'environ 1,5 mm. Réalisée en chlorure de polyvinyle, et fixée par trois rivets "pop", comme précédemment indiqué, la cellule peut être recouverte d'un enduit tel que celui connu sous le nom de "blackson". Elle est alors parfaitement invisible et indétectable au-dessous du véhicule.

Par ailleurs, la cellule n'étant pas nécessairement "directionnelle", il n'est pas obligatoire de la fixer selon un angle précis par rapport à l'antenne que comporte le lecteur. En variante, la cellule peut être noyée dans de la matière plastique.

Le principe de fonctionnement est le suivant :
- l'antenne du lecteur L3 émet un faisceau électromagnétique, par exemple à une fréquence de 120 kHz, dans la direction générale où l'on pourrait "voir" les cellules d'un véhicule;
- chaque cellule absorbe et module par impulsions, en fonction de son propre code, la partie du faisceau qui la frappe;
- le lecteur L3 perçoit les variations impulsionnelles de l'énergie transmise qui en résultent; par différence avec le signal initial l'absorption impulsionnelle de l'énergie par la cellule permet de retrouver son code, donc de l'identifier.

La fréquence des rayonnements choisis, à savoir 120 kHz, permet une propagation suffisante dans l'air. Bien entendu, on pourra prendre toute autre fréquence permettant une telle propagation.

De même, la mise en oeuvre de l'invention n'est pas limitée au rayonnement par ondes kilométriques. On peut utiliser d'autres types d'ondes radioélectriques, en particulier en bande X, voire lumineuses.

Les cellules P1 et P2 peuvent porter chacune une partie du code identifiant le véhicule. C'est alors la concaténation des deux codes, donc des deux lectures, qui donnera un code unique correspondant de façon biunivoque au véhicule concerné.

Selon une variante,chacune des deux cellules P1 et P2 possède le code unique propre au véhicule. Si la lecture ne donne qu'un seul code pour une seule cellule, la cellule manquante sera assimilée à une "anomalie", laissant supposer que le véhicule est en infraction (au sens large de ce terme), c'est-à-dire par exemple qu'il s'agit d'un véhicule volé.

Les essais effectués ont montré que le dispositif ci-dessus ne présentait aucun problème de contrainte ou d'interférences particulières.

Les lecteurs tels que L3 peuvent présenter une surface de 0,80 mètre x 0,80 mètre. Une tolérance assez large est disponible quant à l'angle entre la direction de visée du lecteur et les positions attendues des cellules. La lecture peut se faire pour une distance entre l'antenne du lecteur L3 et les cellules P1 et P2 qui va de 0,70 à l mètre.

Les signaux fournis par le lecteur L3 précité peuvent être des signaux numériques. Le cas échéant, on les transforme en des signaux propres à être compris par un système informatique, tel que l'ordinateur 04 de la figure 1.

Cet ordinateur peut alors coopérer avec des fichiers désignés par F5 sur la figure 1, et comprenant par exemple un fichier central, accompagné d'un fichier de cessation de surveillance, au cas où par exemple le propriétaire du véhicule ne paierait plus une redevance associée au contrôle des deux plaquettes que porte son automobile.

Dans l'application préférentielle, le fichier central peut être ou comporter un fichier de véhicule volé.

La figure 2 montre mieux les applications de l'invention.

Le fichier central F5 peut être rempli d'abord à l'égard des informations fournies par un client 60 auquel on a volé son véhicule.

Ce fichier peut également être rempli à partir d'informations délivrées par des centres agréés 65.

Le fichier central peut encore communiquer avec les services de police 61, de gendarmerie 62, d'assurances 63 ou d'autres services 64.

Les points de passage obligé où peut s'appliquer l'invention sont par exemple les points de péage 10, les entrées sorties de parkings 11 (surtout les entrées), l'entrée à la fourrière 12, ainsi que l'entrée d'un garage 13. Dans chaque cas, on a représenté en L10, L11, L12 et L13, respectivement, la zone couverte par le détecteur ou lecteur L.

Un dispositif informatique local tel que O4 (non représenté en figure 2) assure l'échange d'informations entre chacun des lecteurs L10 à L13 et le fichier central F5.

Les informations de codes définies par le lecteur L3, en langage informatique, peuvent être soit stockées au niveau du lecteur, soit transmises à distance pour être stockées par exemple dans un site central où se trouve le fichier F5. La transmission peut s'effectuer par différentes voies comme le télex, des lignes PTT commutées ou non, des réseaux, etc.

Dans le mode de réalisation de l'invention le plus simple, chaque véhicule, équipé de plaquettes ou cellules, et passant devant un lecteur est systématiquement et automatiquement "lu".

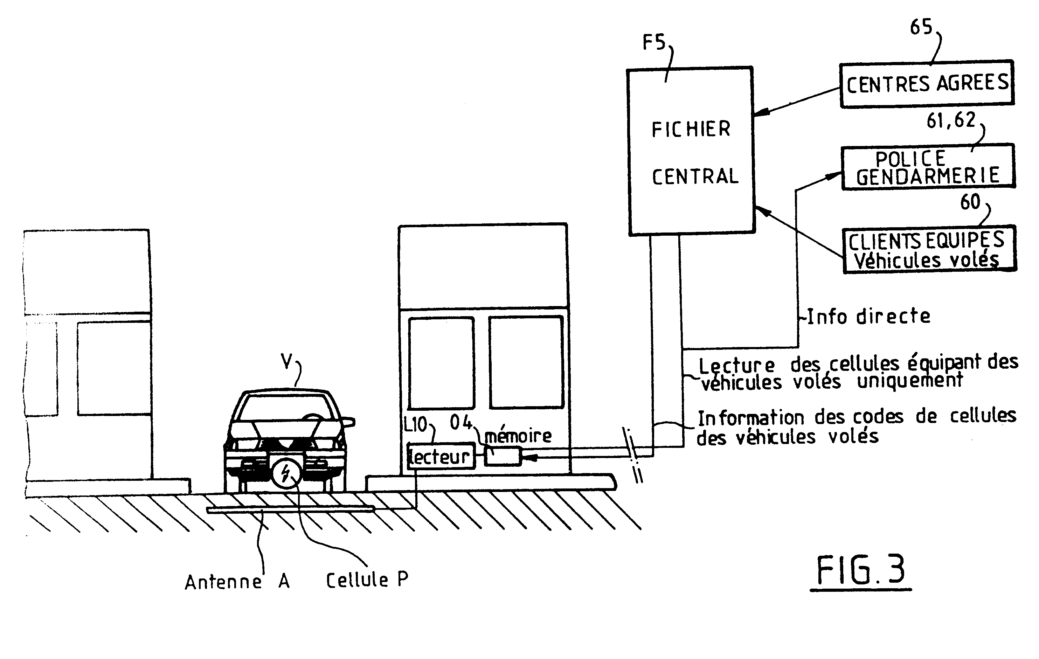

Un sous-fichier des véhicules signalés comme volés au fichier central est transmis (figure 3) à chaque poste de contrôle (10, 11, 12, 13, figure 2).

Jusqu'à présent, tout se passe au niveau de la seule comparaison du code lu à des codes reconnus comme équipant des véhicules volés.

Si la comparaison indique un vol, alors les données beaucoup plus complètes qui peuvent être prévues au fichier central F5 sont prises en considération : lieu et heure de passage du véhicule, identité exacte du véhicule (immatriculation, numéro de châssis), ainsi que les coordonnées du propriétaire.

On évite ainsi, dans le cas général de véhicules circulant sur la voie publique, de porter atteinte à la liberté des citoyens, puisque les informations dans leur ensemble ne sont disponibles que dans le fichier central F5, où elles peuvent être protégées.

Seuls les codes sont transmis au poste de contrôle.

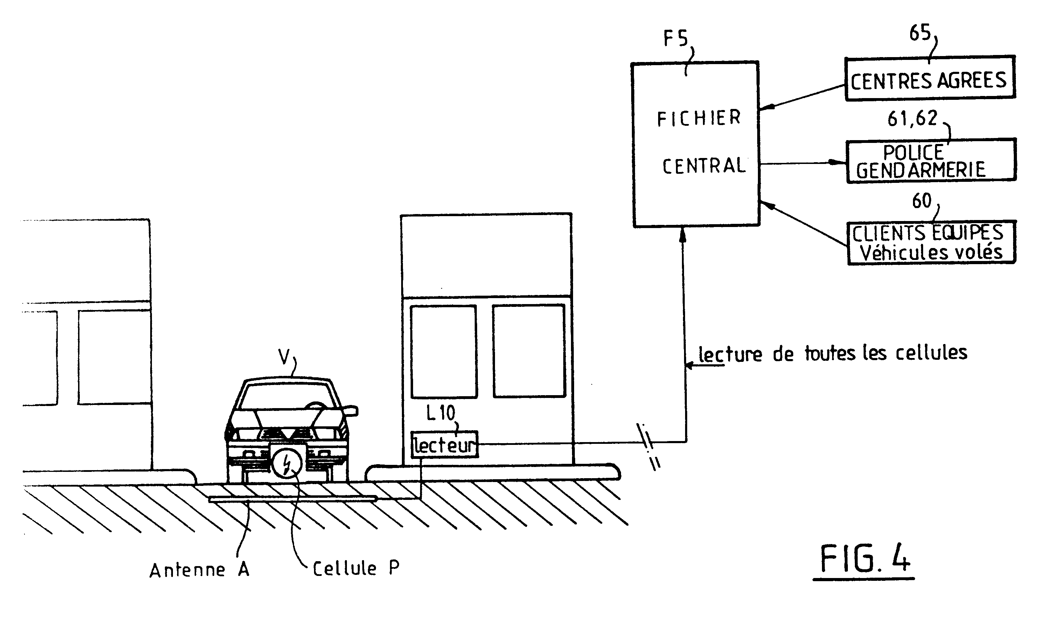

Une variante (figure 4) consiste d'ailleurs à simplement transmettre les codes lus du poste contrôle au fichier central, pour certaines applications.

Par ailleurs, on peut imaginer que des garages particuliers, à usage privé ou public, soient munis d'un tel système de code pour leurs abonnés, par exemple. Dans ce cas, le fichier central peut se situer au même endroit que le garage.

Bien entendu la mise en oeuvre de l'invention n'est pas à limiter aux seuls cas des véhicules volés. On peut par exemple prévoir la réalisation de contrôles douaniers, de contrôles quant à l'existence d'une assurance, qui serait matérialisée par des plaquettes selon l'invention, ou encore de contrôles sur le paiement de la vignette, et plus généralement toute opération susceptible d'être associée de manière biunivoque à un véhicule (péages automatiques d'autoroute, stationnement en ville, par exemple).

Convenablement miniaturisé un dispositif selon l'invention peut également servir pour commander l'ouverture des serrures de portes de véhicule, et/ou le déblocage de leurs antivols de direction. Comme précédemment, un fichier permet de conserver le numéro de code de chaque système et de le lier avec le numéro de série du véhicule concerné.

L'équivalent du lecteur est disposé au niveau d'un dispositif de commande centrale de verrouillage du véhicule, placé de préférence dans la portière côté conducteur, et/ou au niveau de l'antivol de direction. L'équivalent de la clef d'ouverture est la cellule selon l'invention. Mais on peut envisager également la disposition réciproque.

**Revendications**

1. Procédé de contrôle du déplacement d'objets, en particulier de véhicules automobiles, du type dans lequel on fait passer chaque véhicule par une voie de passage obligé, certains au moins des véhicules étant munis d'au moins une cellule (P1, P2) noyée dans l'une de leurs surfaces principales externes, mais de façon invisible et en un point indéterminable, la ou les cellules étant propres à définir de manière passive, sans alimentation électrique propre, un code unique lisible à distance et associé d'une manière biunivoque au véhicule, chaque cellule comportant une antenne ou boucle réceptrice (60), chaque voie étant munie d'un détecteur (L3) propre à lire sur chaque véhicule le code défini par la ou les cellules qu'il porte, ainsi que d'organes de traitement (04), le détecteur comportant une antenne en boucle (55) émettant un faisceau électromagnétique à une fréquence prédéterminée, caractérisé en ce que chaque cellule module la charge de son antenne ou boucle réceptrice (60) selon des impulsions représentant son propre code unique lorsque son antenne ou boucle réceptrice (60) est couplée avec une antenne en boucle (55) d'un détecteur de manière à effectuer une modulation par absorption des ondes émises,

en ce que le détecteur lit le code unique par exploitation des variations de l'appel de courant dans son antenne en boucle (55),

en ce qu'on enregistre dans au moins un fichier de référence (F5) des informations d'identification en rapport avec certains au moins des codes uniques, et

en ce que les organes de traitement sont propres à rechercher si chaque code lu se trouve dans le fichier de référence, et à mémoriser le résultat de cette recherche,

ce qui permet notamment l'identification et le suivi de véhicules volés.

2. Procédé selon la revendication 1, caractérisé en ce que le détecteur lit la cellule par voie d'ondes, en particulier kilométriques.

3. Procédé selon l'une des revendications 1 à 2, caractérisé en ce qu'on munit chaque véhicule d'au moins deux cellules (P1, P2) propres à définir ensemble ledit code unique.

4. Procédé selon la revendication 3, caractérisé en ce que les deux cellules (P1, P2) sont implantées à des endroits différents du véhicule.

5. Procédé selon l'une des revendications 1 à 4, caractérisé en ce qu'on produit au moins un fichier des codes en cours de validité, et un fichier des codes à surveiller, tels que ceux de véhicules volés.

6. Procédé selon l'une des revendications 1 à 5, caractérisé en ce que la voie (13) comprend un portique, muni d'une barrière, dont l'ouverture est subordonnée au résultat de la comparaison du code du véhicule au fichier de référence.

7. Procédé selon l'une des revendications précédentes, caractérisé en ce que le détecteur (L10, L11, L12, L13) est noyé dans une paroi du portique ou dans le sol.

8. Procédé selon l'une des revendications précédentes, caractérisé en ce que le détecteur (L10, L11, L12, L13) est placé en un point où le véhicule est astreint à une vitesse moyenne ou faible.

9. Dispositif permettant la mise en oeuvre du procédé selon l'une des revendications précédentes, comportant à bord de certains véhicules au moins, une cellule passive comportant une antenne ou boucle réceptrice (60), propre à répondre à distance à une émission d'ondes prédéterminée par un code unique, associée de manière biunivoque au véhicule, et au moins un détecteur comportant une antenne en boucle enterrée pour produire l'émission d'ondes à une fréquence prédéterminée et détecter le code unique, caractérisé en ce que chaque cellule comporte des moyens (66, 62, 64) de modulation de la charge de son antenne ou boucle réceptrice (60) selon des impulsions représentant son propre code unique lorsque son antenne ou boucle réceptrice (60) est couplée avec l'antenne en boucle (55) du détecteur de manière à effectuer une modulation par absorption des ondes émises,

et en ce que le détecteur comporte des moyens (58) d'exploitation des variations de l'appel de courant dans son antenne en boucle (55) pour lire le code unique.

10. Dispositif selon la revendication 9, caractérisé en ce que la modulation par absoprtion s'effectue par amortissement de l'antenne ou boucle réceptrice (60) de la cellule passive.

11. Dispositif selon la revendication 9, caractérisé en ce que la modulation par absorption s'effectue par décalage de fréquence de l'antenne (60, 62) ou boucle réceptrice de la cellule passive.

12. Dispositif selon l'une des revendications 9 à 11, caractérisé en ce que la valeur 1 et la valeur 0 d'un bit du code sont transmises par des trains d'impulsions à une première cadence pour la valeur 1, et à une deuxième cadence différente de la première pour la valeur 0.

**13.** Dispositif selon l'une des revendications 9 à 12, caractérisé en ce que les moyens d'émission comportent des moyens (56) de compensation des variations de charge de l'antenne en boucle, lors du passage d'un véhicule.

**14.** Dispositif selon l'une des revendications 9 à 13, caractérisé en ce qu'il est appliqué au déverrouillage d'une serrure de porte ou d'un antivol de direction.

**Claims**

**1.** Method of monitoring the movement of objects, in particular automotive vehicles, of the type in which each vehicle is made to pass along a compulsory lane, at least some of the vehicles being provided with at least one cell (P1, P2) embedded in one of their main external surfaces but invisibly and at a point which cannot be determined, the cell or cells being suitable for defining passively, without their own electrical supply, a unique code which can be read at a distance and associated in a biunique manner with the vehicle, each cell comprising a receiver loop or antenna (60), each lane being provided with a sensor (L3) which can read from each vehicle the code defined by the cell or cells which it supports, as well as processing means (04), the sensor comprising a looped antenna (55) emitting an electromagnetic beam at a predetermined frequency, characterised in that each cell modulates the charge of its receiver loop or antenna (60) according to pulses representing its own unique code when its receiver loop or antenna (60) is coupled with a looped antenna (55) of a sensor so as to perform modulation by absorption of the waves emitted; in that the sensor reads the unique code by using the variations in the current surge in its looped antenna (55); in that identification data relating to at least some of the unique codes are recorded in at least one reference file (F5) are ; and in that the processing means can search to discover whether each code read is in the reference file and store the result of this search, which in particular enables stolen vehicles to be identified and followed.

**2.** Method according to Claim 1, characterized in that the sensor reads the cell via waves, in particular long waves.

**3.** Method according to either of Claims 1 and 2, characterised in that each vehicle is provided with at least two cells (P1, P2) which together can define the said unique code.

**4.** Method according to Claim 3, characterised in that the two cells (P1, P2) are located at different points on the vehicle.

**5.** Method according to any one of Claims 1 to 4, characterised in that at least one file is produced for the codes being validated and one file is produced for the codes to be monitored, such as those of stolen vehicles.

**6.** Method according to any one of Claims 1 to 5, characterised in that the lane (13) comprises a gantry equipped with a barrier, of which the opening is dependent on the result of the comparison of the vehicle code with the reference file.

**7.** Method according to any one of the preceding claims, characterised in that the sensor (L10, L11, L12, L13) is embedded in a gantry wall or in the ground.

**8.** Method according to any one of the preceding claims, characterized in that the sensor (L10, L11, L12, L13) is located at point where the vehicle is forced to drive at an average or low speed.

**9.** Device enabling the method according to any one of the preceding claims to be performed, comprising on board at least some vehicles a passive cell comprising a receiver loop or antenna (60) which can respond at a distance to a wave emission predetermined by a unique code, associated in a biunique manner with the vehicle, and at least one sensor comprising an embedded looped antenna for producing the emission of waves at a predetermined frequency and detecting the unique code, characterised in that each cell comprises means (66, 62, 64) for modulating the charge of its receiver loop or antenna (60) according to pulses representing its own unique code when its receiver loop or antenna (60) is coupled with the looped antenna (55) of the sensor so as to perform modulation by absorption of the waves emitted; and in that the sensor comprises means (58) for utilizing the variations in the current surge in its looped antenna (55) in order to read the unique code.

**10.** Device according to Claim 9, characterised in that modulation by absorption is performed by damping the receiver loop or antenna (60) of the passive cell.

**11.** Device according to Claim 9, characterised in that modulation by absorption is performed by shifting the frequency of the antenna (60, 62) or receiver loop of the passive cell.

**12.** Device according to any one of Claims 9 to 11, characterized in that the value 1 and the value 0 of a code bit are transmitted by pulse sequences at a first speed for the value 1 and at a second speed, different from the first, for the value 0.

**13.** Device according to any one of Claims 9 to 12, characterised in that the emission means comprise means (56) for compensating the variations in the looped antenna charge when a vehicle passes.

**14.** Device according to any one of Claims 9 to 13, characterised in that it is used for unlocking a door lock or a steering anti-theft device.

**Patentansprüche**

**1.** Verfahren zur Kontrolle der Bewegung von Objekten, insbesondere von Fahrzeugen, der Art, bei dem man jedes Fahrzeug über eine obligatorische Spur fahren läßt, wobei wenigstens einige bestimmte Fahrzeuge mit wenigstens einer in einer der äußeren Hauptoberflächen auf unsichtbare Weise und an einem nicht bestimmbaren Ort versenkten Zelle (P1, P2) versehen sind, wobei die Zelle oder die Zellen geeignet sind, passiv, ohne eigene Stromversorgung, einen eindeutigen, in der Entfernung lesbaren Code zu erzeugen, der eineindeutig mit dem Fahrzeug verbunden ist, wobei jede Zelle eine Empfangsantenne oder -schleife (60) aufweist; wobei jede Spur mit wenigstens einem Detektor (L3), der geeignet ist, auf jedem Fahrzeug den von der Zelle oder den Zellen, die es trägt, erzeugten Code zu lesen, ebenso wie mit Verarbeitungselementen (O4) ausgestattet ist, wobei der Detektor eine Antenne oder Schleife (55) umfaßt, die einen elektromagnetischen Strahl einer vorgegebenen Frequenz aussendet, dadurch gekennzeichnet, daß jede Zelle die Ladung ihrer Empfangsantenne oder -schleife (60) entsprechend Impulsen moduliert, die ihren eigenen, eindeutigen Code angeben, wenn ihre Empfangsantenne oder -schleife (60) mit einer Antenne oder Schleife (55) eines Detektors so verbunden ist, daß eine Modulation durch Absorption der ausgesandten Wellen durchgeführt wird; daß der Detektor den eindeutigen Code durch Feststellen der Stromstoßänderungen in seiner Antenne oder Schleife (55) liest;

daß man in wenigstens einer Bezugsdatei (F5) Identifikationsinformationen bezüglich wenigstens bestimmter der vorgenannten eindeutigen Codes registriert, und

daß die Bearbeitungselemente geeignet sind, herauszufinden, ob jeder gelesene Code sich in der Bezugsdatei befindet, und das Ergebnis dieser Suche zu speichern,

was insbesondere die Identifikation und die Verfolgung von gestohlenen Fahrzeugen erlaubt.

**2.** Verfahren nach Anspruch 1, dadurch gekennzeichnet, daß der Detektor die Zelle mittels Wellen, insbesondere mittels Kilometerwellen, liest.

**3.** Verfahren nach einem der Ansprüche 1 bis 2, dadurch gekennzeichnet, daß man jedes Fahrzeug mit wenigstens zwei Zellen (P1, P2) ausrüstet, die geeignet sind, zusammen den eindeutigen Code zu bilden.

**4.** Verfahren nach Anspruch 3, dadurch gekennzeichnet, daß die beiden Zellen (P1, P2) an verschiedenen Stellen des Fahrzeugs eingesetzt sind.

**5.** Verfahren nach einem der Ansprüche 1 bis 4, dadurch gekennzeichnet, daß man wenigstens eine Datei von gültigen Codes und eine Datei der zu überwachenden Codes, wie etwa die der gestohlenen Fahrzeuge, erzeugt.

**6.** Verfahren nach einem der Ansprüche 1 bis 5, dadurch gekennzeichnet, daß die Spur (13) einen Bogen umfaßt, der mit einer Barriere versehen ist, deren Öffnung dem Resultat des Vergleichs des Codes des Fahrzeugs mit der Bezugsdatei unterworfen ist.

**7.** Verfahren nach einem der vorhergehenden Ansprüche, dadurch gekennzeichnet, daß der Detektor (L10, L11, L12, L13) in einer Wand des Bogens oder im Boden versenkt ist.

**8.** Verfahren nach einem der vorhergehenden Ansprüche, dadurch gekennzeichnet, daß der Detektor (L10, L11, L12, L13) an einer stelle angeordnet ist, wo das Fahrzeug zu einer mittleren oder geringen Geschwindigkeit gezwungen wird.

**9.** Vorrichtung, die die Ausführung des Verfahren nach einem der vorhergehenden Ansprüche ermöglicht, und die umfaßt: an Bord wenigstens bestimmter Fahrzeuge eine passive Zelle mit einer Empfangsantenne oder -schleife (60), die geeignet ist auf Entfernung auf eine vorgegebene Wellenemission mit einem eindeutigen Code zu antworten, und die eineindeutig mit dem Fahrzeug verbunden ist, und wenigstens einen Detektor mit einer eingegrabenen Antenne oder Schleife zum Erzeugen einer Sendung von Wellen mit einer vorgegebenen Frequenz und zum Feststellen des eindeutigen Codes, dadurch gekennzeichnet, daß jede Zelle Vorrichtungen (66, 62, 64) zur Modulation der Ladung seiner Empfangsantenne oder - schleife (60) entsprechend den Impulsen umfaßt, die ihren eigenen, eindeutigen Code angeben, wenn ihre Empfangsantenne oder -schleife (60) mit der Antenne oder Schleife (55) des Detektors so verbunden ist, so daß sie eine Modulation durch Absorption der ausgesandten Wellen durchführt,

und daß der Detektor Vorrichtungen (58) zur Auswertung der Stromstoßänderungen in seiner Antenne oder Schleife (55) umfaßt, um den eindeutigen Code zu lesen.

10. Vorrichtung nach Anspruch 9, dadurch gekennzeichnet, daß die Modulation durch Absorption durch Dämpfung der Empfangsautenne oder -schleife (60) der passiven Zelle erfolgt.

11. Vorrichtung nach Anspruch 9, dadurch gekennzeichnet, daß die Modulation durch Absorption durch Verschiebung der Frequenz der Empfangsantenne oder -schleife (60, 62) der passiven Zelle erfolgt.

12. Vorrichtung nach einem der Ansprüche 9 bis 11, dadurch gekennzeichnet, daß der Wert 1 und der Wert 0 eines Bits des Codes durch Impulszüge einer ersten Folge für den Wert 1 und einer zweiten, von der ersten verschiedenen Folge für den Wert 0 übertragen werden.

13. Vorrichtung nach einem der Ansprüche 9 bis 12, dadurch gekennzeichnet, daß die Sendevorrichtung Vorrichtungen (56) zum Kompensation von Ladungsänderungen der Antenne oder Schleife bei der Durchfahrt eines Fahrzeugs aufweisen.

14. Vorrichtung nach einem der Ansprüche 9 bis 13, dadurch gekennzeichnet, daß sie zum Entriegeln eines Türschlosses oder eines Lenkradschlosses verwendet wird.

EP 0 252 773 B1

V

P2

P1

A

L3

O4

**FIG. 1**

F5 — Véhicules volés

Fichier Central

Cessation

FIG.2

EP 0 252 773 B1

65 — CENTRES AGREES

61,62

POLICE GENDARMERIE

60

CLIENTS EQUIPES Véhicules volés

Info directe

Lecture des cellules équipant des véhicules volés uniquement

Information des codes de cellules des véhicules volés

F5 — FICHIER CENTRAL

mémoire

L10   04   lecteur

V

Antenne A   Cellule P

FIG.3

CENTRES AGREES

65

61,62

POLICE GENDARMERIE

60

CLIENTS EQUIPES Véhicules volés

F5

FICHIER CENTRAL

lecture de toutes les cellules

L10 lecteur

V

Cellule P

Antenne A

FIG. 4

FIG. 5

EP 0 252 773 B1